# EUROPÄISCHE PATENTANMELDUNG

(11) **EP 0 567 669 A1**
(43) Veröffentlichungstag der Anmeldung: **03.11.1993**
(21) Anmeldenummer: 92107150.2
(22) Anmeldetag: 27.04.1992
(51) Int. Cl.: B29C 59/02, B29C 33/38, B44B 5/02

(54) **Prägewerkzeug für die Struktur- und/oder Reliefprägung und Verfahren zu seiner Herstellung**

(71) Anmelder: HÄGE INDUSTRIEGRAVUREN GmbH, D-89177 Börslingen (DE)
(72) Erfinder: HÄGE INDUSTRIEGRAVUREN GmbH, D-89177 Börslingen (DE)
(74) Vertreter: Dziewior, Joachim, Dipl.-Phys. Dr.

(57) **Zusammenfassung**

Die Erfindung betrifft ein Prägewerkzeug für die Struktur- und/oder Reliefprägung, insbesondere für den Prägefoliendruck. Das Prägewerkzeug besteht aus einer Prägedruckform (5) (Matrize) und einer Gegendruckform (6) (Patrize), die aus der Prägedruckform (5) abgeformt wird. Nach der Erfindung ist eine mit der ersten Prägedruckform (5) übereinstimmende zweite Prägedruckform (5) vorgesehen, deren Relief- und/oder Strukturform nicht freigestellt ist, wobei die zweite Prägedruckform (5) zum Abformen der Gegendruckform (6) dient.

## Beschreibung

Die Erfindung betrifft ein Prägewerkzeug für die Struktur- und/oder Reliefprägung beim Prägefoliendruck, mit einer Prägedruckform (Matrize) und einer Gegendruckform (Patrize), die aus der Prägedruckform abgeformt ist.

Ferner betrifft die Erfindung ein Verfahren zur Herstellung eines solchen Prägewerkzeugs.

Es sind Vorrichtungen bekannt, die zu einer trockenen Reliefbildung, einer sogenannten Blindprägung, für Materialien in Blatt- oder Plattenform, wie zum Beispiel Papier, dienen. In der Patentschrift AT-E-36 988 B wird eine Blindprägevorrichtung beschrieben, bei der die Verformung des Prägematerials durch ein Zusammenwirken von einem Prägestempel und einem Gegenstempel erfolgt. Beide besitzen ein gegenseitig inverses Relief. Die Formen der beiden Stempel werden jeweils für sich voneinander unabhängig, zueinander komplementär durch Gravur angefertigt. Weil beide Formen nicht nur im Bereich des Reliefs, sondern - ohne dazwischen gelegtes Prägegut - ganzflächig und formschlüssig einander anliegen, verteilt sich die Andruckkraft gleichmäßig auf die ganze Fläche und ist daher unmittelbar an der Gravur zu gering, um eine konturscharfe Prägung zu erreichen. Zur Erhöhung der Konturschärfe im Prägematerial erfolgt daher eine bevorzugte Krafteinleitung in den Bereich des Reliefs mit Hilfe sogenannter Druckgegenlager.

Beim Prägefoliendruck werden hingegen zusätzlich Teile der sog. Transferschichten der Prägefolie mittels der Prägedruckform auf den Bedruckstoff übertragen. Dazu muß die Prägedruckform freigestellt sein, um eine gezielte lokal begrenzte Übertragung der Prägefolie sicherzustellen. Hierbei bestimmt die Gestalt der Prägedruckform die Form der übertragenen Transferschichten. Beim planen Prägefoliendruck besteht die Gegendruckform aus einer ebenen Fläche.

Erfolgt der Prägefoliendruck dagegen mit Struktur bzw. mit Relief, so muß die Gegendruckform in ihrer Gestalt der Prägedruckform invers angepaßt sein. Zur Herstellung der Gegendruckform ist es bisher üblich, die Prägedruckform in der Prägemaschine auf den richtigen Stand zu bringen und anschließend die Maschine auf eine Temperatur von ca. 130° zu erwärmen. Auf der Gegendruckplatte wird eine plane Grundplatte befestigt und darauf eine thermoplastische Folie aufgeklebt. Anschließend wird die Maschine langsam zugefahren, so daß die thermoplastische Folie die Form des Prägestempels annimmt und sich mit der Grundplatte fest verbindet. Dabei wird jedoch das überschüssige Material der thermoplastischen Folie in die Freiflächen der Prägedruckform gepreßt. Daher muß nach dem Erkalten der Gegendruckform das überschüssige Material in mühseliger Handarbeit mit feinen Messern entfernt werden.

Der Erfindung liegt die Aufgabe zugrunde, ein Prägewerkzeug der eingangs genannten Art zu schaffen, das die Rüstzeiten von Prägemaschinen erheblich verringert und insbes. das Entfernen überschüssigen Materials nach dem Ausformen der Gegendruckform überflüssig macht.

Diese Aufgabe wird nach der Erfindung dadurch gelöst, daß eine mit der ersten Prägedruckform übereinstimmende zweite Prägedruckform vorgesehen ist, deren Relief- und/oder Strukturform nicht freigestellt ist, wobei die zweite Prägedruckform zum Abformen der Gegendruckform dient.

Der durch die Erfindung erreichte Vorteil besteht im wesentlichen darin, daß durch die nicht freigestellte Prägedruckform keine Freiflächen vorhanden sind, in die überschüssiges Material beim Umformen der Gegendruckform fließen kann. Auf diese Weise kann unmittelbar nach dem Ausformen der Gegendruckform lediglich nach Austauschen der Prägedruckform unmittelbar mit dem Prägevorgang begonnen werden. Die nicht freigestellte Prägedruckform kann dabei stets erneut für die Anfertigung weiterer Gegendruckformen dienen, soweit diese durch den Gebrauch abgenutzt oder beschädigt sind.

In bevorzugter Ausführungsform der Erfindung ist die Gegendruckform aus einem faserverstärkten Kunststoffmaterial gebildet.

In verfahrensmäßiger Hinsicht sieht die Erfindung vor, daß zum Abformen der Gegendruckform zunächst die in ihrer Relief- bzw. Strukturform nicht oder noch nicht freigestellte Prägedruckform gemeinsam mit einem umformbaren, auf ihrer strukturierten Seite angeordneten Patrizenwerkstoff in eine Presse eingelegt wird, daß anschließend die Presse zugefahren und die Gegendruckform unter Wärme- und/oder Druckanwendung ausgeformt und daß schließlich nach dem öffnen der Presse die Relief- und/oder Strukturform der Prägedruckform freigestellt oder die nicht freigestellte Prägedruckform gegen eine gleiche, jedoch freigestellte Prägedruckform ausgewechselt wird.

Sofern von einem bestimmten Motiv nur eine geringe Anzahl von Prägungen vorgenommen werden soll, für die die Abformung einer einzigen Gegendruckform ausreichend ist, genügt die Anfertigung einer einzigen Prägedruckform. Dabei wird die Gegendruckform aus der noch nicht freigestellten Prägedruckform abgeformt. Auf diese Weise wird ein Übertreten des verflüssigten Patrizenwerkstoffs in die durch die Freistellung der Prägedruckform entstehenden Freiflächen verhindert. Hierbei besteht auch die Möglichkeit, bedarfsweise einige Gegendruckformen anzufertigen, bevor für die eigentliche Prägung die Prägedruckform freigestellt wird.

Ist dagegen die Zahl der vorzunehmenden Prägungen so hoch, daß ein häufigerer Austausch der Gegendruckform erforderlich ist, so ist es vorteilhafter, eine freigestellte sowie eine nicht freigestellte, bezüglich des Motivs jedoch identisch übereinstimmende Prägedruckform vorzusehen, wobei die nicht freigestellte Prägedruckform der Anfertigung der Gegendruckformen dient, während die freigestellte Prägedruckform während der eigentlichen Prägung zum Einsatz kommt.

Um den Austausch der Präge- und Gegendruckform zu vereinfachen, kann zweckmäßigerweise während oder nach dem Ausformen der Gegendruckform diese mit Justierelementen zur Ausrichtung gegenüber der Prägedruckform versehen werden. Insbes. können die Prägedruckform und die Gegendruckform mit Paßlöchern versehen werden, in die zur gegenseitigen Ausrichtung Paßstifte einsetzbar sind. Diese Paßstifte können nach der erfolgten Ausrichtung wieder entnommen werden, so daß keine den Prägevorgang störenden Justiermittel stehen bleiben.

Der Patrizenwerkstoff kann zweckmäßigerweise von einem faserverstärkten Kunststoff gebildet sein. Insbes. ist im Rahmen der Erfindung vorgesehen, daß der Patrizenwerkstoff von mit Harz imprägnierten Fasern gebildet ist, wobei die Aushärtung des Harzes im Anschluß an die Ausformung der Gegendruckform erfolgt. Hierbei bleibt die Gegendruckform bis zum Abschluß des Aushärtevorgangs unter Druckbelastung durch die Prägedruckform. Auf diese Weise lassen sich besonders formstabile und haltbare Gegendruckformen herstellen.

Die Fasern können zweckmäßigerweise als Glas-, Kohle-, Carbon-, Aramid- oder Silikatfasern ausgebildet sein. Als Kunststoff bzw. als Harz finden im Rahmen der Erfindung vorwiegend Polyester, Epoxidharz oder Polymid Verwendung.

Wesentlich ist hierbei jedenfalls, daß die Prägedruckform und die Gegendruckform im wesentlichen den gleichen Wärmeausdehnungskoeffizienten aufweisen, so daß nach Ausformung, Aushärtung und Abkühlung die Maßhaltigkeit und Paßgenauigkeit zwischen der Prägedruckform und der Gegendruckform erhalten bleibt.

Im folgenden wird die Erfindung an einem in der Zeichnung dargestellten Ausführungsbeispiel näher erläutert; es zeigen:
- Fig. 1: die Prägedruckform mit einem einfachen Prägemotiv in Draufsicht,
- Fig. 2: eine nicht freigestellte Prägedruckform für das Motiv nach Fig. 1,
- Fig. 3: den Gegenstand nach Fig. 1 im Längsschnitt,
- Fig. 4: die mit dem Gegenstand nach Fig. 2 angefertigte Gegendruckform.
- Fig. 5: eine schematische Darstellung des Prägefoliendrucks.

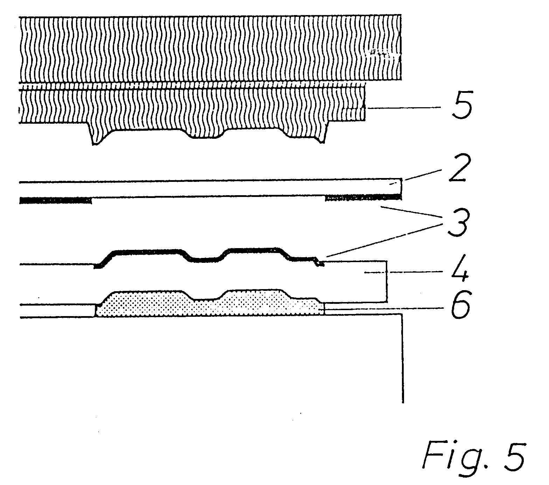

Das in der Zeichnung dargestellte Prägewerkzeug ist für die Strukturprägung und/oder Reliefprägung vorgesehen und dient insbes. für den Prägefoliendruck. Beim Prägefoliendruck wird, wie dies aus Fig. 5 ersichtlich ist, von einer Prägefolie 1, die im wesentlichen aus einem Folienträger 2 sowie auf dem Folienträger 2 angeordneten Transferschichten 3 besteht, jeweils ein Teil der Transferschicht 3 auf den Bedruckstoff 4 übertragen. Dies geschieht mit Hilfe einer Prägedruckform 5 (Matrize), die die Prägefolie 1 gegen den Bedruckstoff 4 und beide gemeinsam gegen eine Gegendruckform 6 (Patrize) pressen. Diese Gegendruckform 6, die zur Prägedruckform 5 eine inverse Gestalt aufweist, wird üblicherweise aus der Prägedruckform 5 unter Verwendung z. B. thermoplastischer Materialien abgeformt.

Da die Prägedruckform 5 in dem an das Motiv 7 anschließenden Randbereich 5.1 freigestellt sein muß, um hier eine Übertragung der Transferschicht 3 auszuschließen, wird beim Ausformen der Gegendruckform 6 in der Regel das verflüssigte Patrizenmaterial in die Freiflächen des Randbereichs 5.1 der Prägedruckform 5 gepreßt, das von dort vor dem Prägevorgang wieder entfernt werden muß.

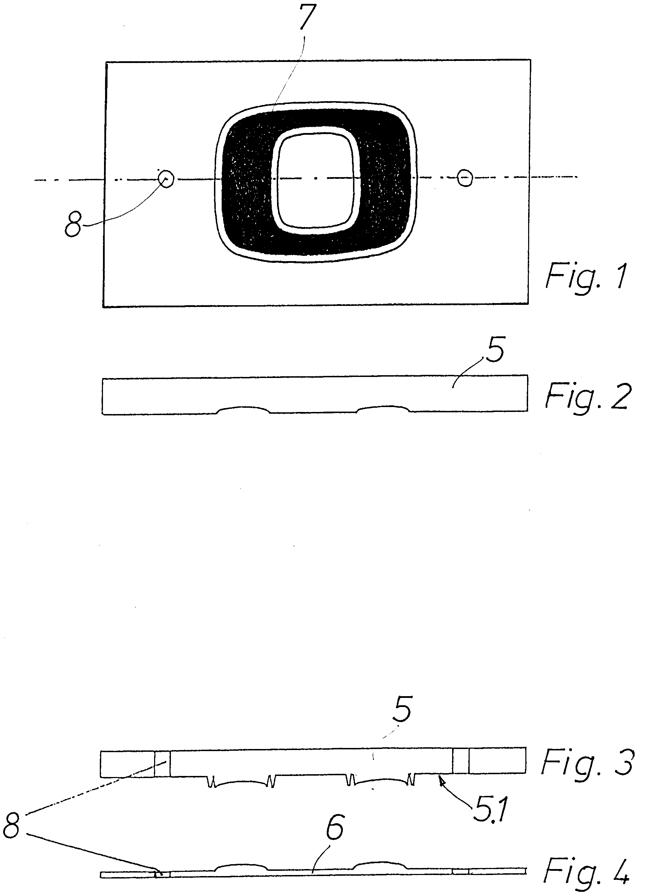

Um dieses zu verhindern, erfolgt die Ausformung der Gegendruckform 6 entweder mit der noch nicht freigestellten Prägedruckform 5 gemäß Fig. 2, oder aber es werden zwei untereinander gleiche Prägedruckformen 5 angefertigt, deren eine für die eigentliche Prägung freigestellt wird, während die andere, nicht freigestellte Prägedruckform 5 ausschließlich der Abformung der Gegendruckform 6 dient.

Die Gegendruckform 6 ist zweckmäßigerweise von einem faserverstärkten Kunststoffmaterial gebildet. Die Fasern können dabei als Glas-, Kohle-, Carbon-, Aramid- oder Silikatfasern ausgebildet sein. Als Kunststoff bzw. Harz erscheinen Polyester, Epoxidharz oder Polymid geeignet.

In der Prägedruckform 5 und in der Gegendruckform 6 sind, wie die Fig. 1, 3 und 4 erkennen lassen, Paßlöcher 8 vorgesehen, in die zu deren gegenseitiger Ausrichtung nicht dargestellte Paßstifte einsetzbar sind. Auf diese Weise ist es ohne weiteres möglich, die Prägedruckform 5 sowie die Gegendruckform 6 aus der Prägemaschine zu entfernen und sie bedarfsweise wieder paßgenau zu justieren.

Das Abformen der Gegendruckform erfolgt gewöhnlich in einer getrennten Vulkanisierpresse, die mit den erforderlichen Heizeinrichtungen versehen ist. Grundsätzlich besteht aber auch die Möglichkeit, die Abformung unmittelbar in der die spätere Prägung durchführenden Presse vorzunehmen, soweit diese dazu geeignet eingerichtet ist.

## Patentansprüche

1. Prägewerkzeug für die Struktur- und/oder Reliefprägung beim Prägefoliendruck,
mit einer Prägedruckform (5) (Matrize) und einer Gegendruckform (6) (Patrize), die aus der Prägedruckform (5) abgeformt ist, dadurch gekennzeichnet, daß eine mit der ersten Prägedruckform (5) übereinstimmende zweite Prägedruckform (5) vorgesehen ist, deren Relief- und/oder Strukturform nicht freigestellt ist, wobei die zweite Prägedruckform (5) zum Abformen der Gegendruckform (6) dient.

2. Prägewerkzeug nach Anspruch 1, dadurch gekennzeichnet, daß die Gegendruckform (6) aus einem faserverstärkten Kunststoffmaterial gebildet ist.

3. Verfahren zur Herstellung von aus einer Prägedruckform (Matrize) und einer Gegendruckform (6) (Patrize) bestehenden Prägewerkzeugen für die Struktur- und/oder Reliefprägung beim Prägefoliendruck, nach Anspruch 1 oder 2, bei welchem zunächst die Struktur bzw. das Relief in die Prägedruckform (5) eingearbeitet und hiervon anschließend die Gegendruckform (6) abgeformt wird, dadurch gekennzeichnet, daß zum Abformen der Gegendruckform (6) zunächst die in ihrer Relief- bzw. Strukturform nicht oder noch nicht freigestellte Prägedruckform (5) gemeinsam mit einem umformbaren, auf ihrer strukturierten Seite angeordneten Patrizenwerkstoff in eine Presse eingelegt wird, daß anschließend die Presse zugefahren und die Gegendruckform (6) unter Wärme- und/oder Druckanwendung ausgeformt und daß schließlich nach dem öffnen der Presse die Relief- und/oder Strukturform der Prägedruckform (5) freigestellt oder die nicht freigestellte Prägedruckform (5) gegen eine gleiche, jedoch freigestellte Prägedruckform (5) ausgewechselt wird.

4. Verfahren nach Anspruch 3, dadurch gekennzeichnet, daß während oder nach dem Ausformen der Gegendruckform (6) diese mit Justierelementen zur Ausrichtung gegenüber der Prägedruckform (5) versehen wird.

5. Verfahren nach Anspruch 3, dadurch gekennzeichnet, daß die Prägedruckform (5) und die Gegendruckform (6) mit Paßlöchern (8) versehen werden, in die zur gegenseitigen Ausrichtung Paßstifte einsetzbar sind.

6. Verfahren nach einem der Ansprüche 3 bis 5, dadurch gekennzeichnet, daß der Patrizenwerkstoff von einem faserverstärkten Kunststoff gebildet ist.

7. Verfahren nach einem der Ansprüche 3 bis 5, dadurch gekennzeichnet, daß der Patrizenwerkstoff von mit Harz imprägnierten Fasern gebildet ist, wobei die Aushärtung des Harzes im Anschluß an die Ausformung der Gegendruckform (6) erfolgt.

8. Verfahren nach Anspruch 6 oder 7, dadurch gekennzeichnet, daß die Fasern als Glas-, Kohle-, Carbon-, Aramid- oder Silikatfasern ausgebildet sind.

9. Verfahren nach einem der Ansprüche 6 bis 8, dadurch gekennzeichnet, daß als Kunststoff bzw. als Harz Polyester, Epoxidharz oder Polymid verwendet wird.

10. Verfahren nach einem der Ansprüche 3 bis 9, dadurch gekennzeichnet, daß die Prägedruckform (5) und die Gegendruckform (6) im wesentlichen den gleichen Wärmeausdehnungskoeffizienten aufweisen.
